(19) **Europäisches Patentamt European Patent Office Office européen des brevets**

(11) **EP 3 354 047 B1**

(12) **EUROPEAN PATENT SPECIFICATION**

(45) Date of publication and mention of the grant of the patent:
**06.11.2019 Bulletin 2019/45**

(51) Int Cl.:
**H04W 4/02** (2018.01)

(21) Application number: **16775335.9**

(22) Date of filing: **23.09.2016**

(86) International application number:
**PCT/IB2016/055719**

(87) International publication number:
**WO 2017/051384 (30.03.2017 Gazette 2017/13)**

(54) **METHOD FOR MEASUREMENT REPORTING RESOLUTION ADAPTATION**

VERFAHREN ZUR MESSUNGSBERICHTAUFLÖSUNGSANPASSUNG

PROCÉDÉ D'ADAPTATION DE RÉSOLUTION DE RAPPORT DE MESURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.09.2015 US 201562233165 P**

(43) Date of publication of application:
**01.08.2018 Bulletin 2018/31**

(73) Proprietor: **Telefonaktiebolaget LM Ericsson (PUBL) 164 83 Stockholm (SE)**

(72) Inventors:
- **GUNNARSSON, Fredrik**
  **SE-587 50 Linköping (SE)**
- **BLANKENSHIP, Yufei**
  **Kildeer, Illinois 60047 (US)**
- **MODARRES RAZAVI, Sara**
  **SE-583 32 Linköping (SE)**
- **RYDÉN, Henrik**
  **SE-16952 SOLNA (SE)**
- **SIOMINA, Iana**
  **SE-183 30 Täby (SE)**
- **SUNELL, Kai-Erik**
  **SE-16873 Bromma (SE)**
- **SUSITAIVAL, Riikka**
  **FI-00250 Helsinki (FI)**
- **WANG, Meng**
  **SE-174 64 Sundbyberg (SE)**
- **ZAIDI, Ali**
  **SE-177 32 Järfälla (SE)**

(74) Representative: **Ericsson Patent Development Torshamnsgatan 21-23 164 80 Stockholm (SE)**

(56) References cited:
- **ERICSSON: "Text Proposal and Discussion on Further enhancements for OTDOA", 3GPP DRAFT; R1-153744, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Beijing, China; 20150824 - 20150828 23 August 2015 (2015-08-23), XP051001192, Retrieved from the Internet: URL:http://www.3gpp.org/ftp/Meetings_3GPP_ SYNC/RAN1/Docs/ [retrieved on 2015-08-23]**
- **ERICSSON: "LPP signaling support for OTDOA/ECID enhancement", 3GPP DRAFT; R2-154712, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Malmö, Sweden; 20151005 - 20151009 26 September 2015 (2015-09-26), XP051023951, Retrieved from the Internet: URL:http://www.3gpp.org/ftp/tsg_ran/WG2_RL 2/TSGR2_91bis/Docs/ [retrieved on 2015-09-26]**

**Description**

TECHNICAL FIELD

The present disclosure relates, in general, to wireless communications and, more particularly, to a method for measurement reporting resolution adaptation.

BACKGROUND

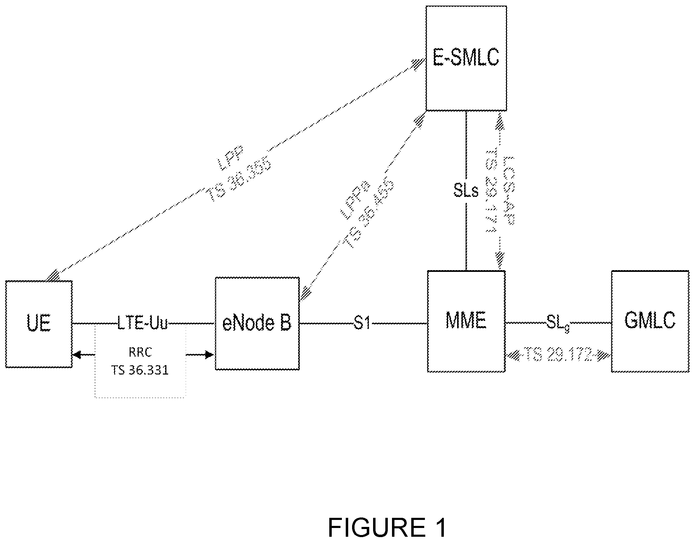

FIGURE 1 is a block diagram of an LTE positioning architecture. Positioning in LTE is supported by the architecture in Figure 1, with direct interactions between a UE and a location server (Evolved-Serving Mobile Location Centre - E-SMLC) via the LTE Positioning Protocol (LPP). Moreover, there are also interactions between the location server and the eNodeB via the LPPa protocol, to some extent supported by interactions between the eNodeB and the UE via the Radio Resource Control (RRC) protocol.

The following positioning techniques are considered in LTE (3GPP 36.305):

- Enhanced Cell ID. Essentially cell ID information to associate the UE to the serving area of a serving cell, and then additional information to determine a finer granularity position such as received signal strength measurements, UE Rx-Tx time difference.

- Assisted GNSS (Global Navigation Satellite System). GNSS information retrieved by the UE, supported by assistance information provided to the UE from E-SMLC.

- OTDOA (Observed Time Difference of Arrival). The UE estimates the time difference of reference signals from different base stations and sends to the E-SMLC for multilateration.

- UTDOA (Uplink TDOA). The UE is requested to transmit a specific waveform that is detected by multiple location measurement units (e.g. an eNB) at known positions. These measurements are forwarded to E-SMLC for multilateration.

The UE estimates the time of arrival of a reference cell and other detected cells based on the received assistance information from E-SMLC. Then, the UE computes the Reference Signal Time Difference (RSTD) of each detected cell in relation to the reference cell. The RSTD subject to a quantization with a resolution of 1 Ts for RSTDs within $\pm$ 4096 Ts, and 5 Ts otherwise (1 Ts = 1/(15000 x 2048) seconds and is the LTE basic time unit).

RSTD measurements and other measurements M are encoded before being reported to the location server. Typically, this means that the measurements are quantized and saturated within a minimum and maximum value. The resulting encoded values are represented by a numeral, typically an integer Mr within a range [0, N-1]. The resolution R can be described as the difference between two measurements mapped to adjacent encoded values. For RSTD, the resolution R = 1 Ts for the RSTDs within $\pm$ 4096 Ts.

Formally, the encoded value Mr can be seen as a function of the measurement M, Mr = f(M).

In addition, the UE estimates the RSTD measurement quality and reports the uncertainty via a range:

$$[nR, (n+1)R-1],$$

where the reporting resolution is R = {5, 10, 20, 30} meters, and n is an index to indicate the value range within which the RSTD uncertainty is estimated to be.

The accuracy of both ECID (Enhanced Cell ID) and OTDOA-based positioning depends on the resolution of the measurement reports for UE Rx-Tx time difference, the measured RSTDs and/or the measured received signal strength that are conveyed from the UE to the E-SMLC. The RAN4 SI TR 36.855 on positioning enhancements concluded that simulation results with different quantization show that increasing reporting granularity to 0.5Ts is beneficial. On the other hand, the positioning related functionalities in current 3GPP specifications were designed for outdoor scenarios since Release 9. In the indoor positioning SI, the target was to enhance the positioning performance for indoor scenarios, where much higher positioning accuracy is demanded. This could be limited by the RSTD resolution which is currently 1Ts at best, which is equivalent to approximately 9.8 meters. This resolution is inadequate for accurate indoor positioning.

"Text Proposal and Discussion on Further enhancements for OTDOA" by Ericsson, 3GPP TSG RAN WG1 Meeting #82, Beijing, China, August 24-28, 2015 XP051001192 discloses enhancements on RSTD measurement reporting for OTDOA-based positioning systems, and also enhancements for supporting MTC UEs having transmitting and receiving capabilities limited to 1.4 MHz in a subframe.

SUMMARY

Based on all these observations, we can emphasize the fact that 0.25 Ts is a futureproof enhancement while considering wider BWs, and moreover by the advanced UE receivers which take advantage of CRS measurements. To address these and the foregoing issues, various methods and apparatuses are disclosed. The present invention is defined by the appended claims.

According to certain embodiments, a method performed by a wireless device for adapting measurement report resolution is disclosed. The method comprises performing a measurement, determining a measurement report resolution to be used, and sending a measurement report to the network node encoded based on the determined measurement report resolution. According to additional embodiments, prior to determining the measurement report resolution to be used, the wireless device informs the network node of the wireless device's capabilities of sending measurement reports encoded based on a plurality of different measurement report resolutions. According to additional embodiments, subsequent to informing the network node of the wireless device's capabilities, and prior to determining the measurement report resolution to be used, the wireless device receives a desired measurement report resolution from the network node.

Also disclosed is a method performed by a network node for adapting measurement report resolution. The method comprises receiving a measurement report of a measurement from a wireless device, and deriving the measurement based on available information relating to measurement report resolution. According to additional embodiments, prior to receiving the measurement report, the network node receives, from the wireless device, the wireless device's capabilities of sending measurement reports encoded based on a plurality of different measurement report resolutions. According to additional embodiments, subsequent to receiving the wireless device's capabilities, and prior to receiving the measurement report, the network node sends a desired measurement report resolution to the wireless device.

Also disclosed is a wireless device for adapting measurement report resolution. The wireless device comprises processing circuitry and a memory. The memory contains instructions executable by the processing circuitry, whereby the wireless device is operative to perform a measurement, determine a measurement report resolution to be used, and send a measurement report to the network node encoded based on the determined measurement report resolution. According to additional embodiments, the wireless device is further operative, prior to determining the measurement report resolution to be used, to inform the network node of the wireless device's capabilities of sending measurement reports encoded based on a plurality of different measurement report resolutions. According to additional embodiments, the wireless device is further operative, subsequent to informing the network node of the wireless device's capabilities, and prior to determining the measurement report resolution to be used, to receive a desired measurement report resolution from the network node.

Also disclosed is a network node for adapting measurement report resolution. The network node comprises processing circuitry and a memory. The memory contains instructions executable by the processing circuitry, whereby the network node is operative to receive a measurement report of a measurement from a wireless device, and derive the measurement based on available information relating to measurement report resolution. According to additional embodiments, the network node is further operative, prior to receiving the measurement report, to receive, from the wireless device, the wireless device's capabilities of sending measurement reports encoded based on a plurality of different measurement report resolutions. According to additional embodiments, the network node is further operative, subsequent to receiving the wireless device's capabilities, and prior to receiving the measurement report, to send a desired measurement report resolution to the wireless device.

Certain embodiments of the present disclosure may provide one or more technical advantages. For example, by introducing an adaptive measurement reporting, the UE can adapt the report mapping by selecting one out of the pre-defined mappings based on the suggested resolution parameters. As another example, the efficient RSTD quantization and measurement reporting will provide the possibility of improved positioning accuracy. Other advantages may be readily apparent to one having skill in the art. Certain embodiments may have none, some, or all of the recited advantages.

BRIEF DESCRIPTION OF THE DRAWINGS

For a more complete understanding of the disclosed embodiments and their features and advantages, reference is now made to the following description, taken in conjunction with the accompanying drawings, in which:

FIGURE 1 is a block diagram of an LTE positioning architecture.
FIGURE 2 is a block diagram illustrating an embodiment of a network, in accordance with certain embodiments;
FIGURE 3 is a flow diagram of a method in a wireless device, in accordance with an embodiment.
FIGURE 4 is a flow diagram of a method in a network node, in accordance with an embodiment;

FIGURE 5 is a signal flow diagram, in accordance with certain embodiments;

FIGURE 6 is a flow diagram of a choice made by the network node about whether it finds it necessary to indicate a desired report resolution to the device, in accordance with certain embodiments;

FIGURE 7 is a flow diagram of a choice made by the device about whether it needs to indicate the selected report resolution or not, in accordance with certain embodiments;

FIGURE 8 illustrates an apparatus at the location server side, in accordance with certain embodiments;

FIGURE 9 illustrates an apparatus at the device side, in accordance with certain embodiments;

FIGURE 10 is a schematic block diagram of an exemplary wireless device, in accordance with certain embodiments;

FIGURE 11 is a schematic block diagram of an exemplary network node, in accordance with certain embodiments; and

FIGURE 12 is a schematic block diagram of an exemplary radio network controller or core network node, in accordance with certain embodiments.

DETAILED DESCRIPTION

The present disclosure contemplates various embodiments that may give network assistance to a UE in properly selecting a measurement reporting resolution. The measurement reporting resolution assistance can be initiated either by a request from a UE or by the network itself. The UE also has the possibility to reveal the resolution selection employed for measurement reporting, to the network with the hope of validating its current choice and gaining support for further improvements in the parameter selection.

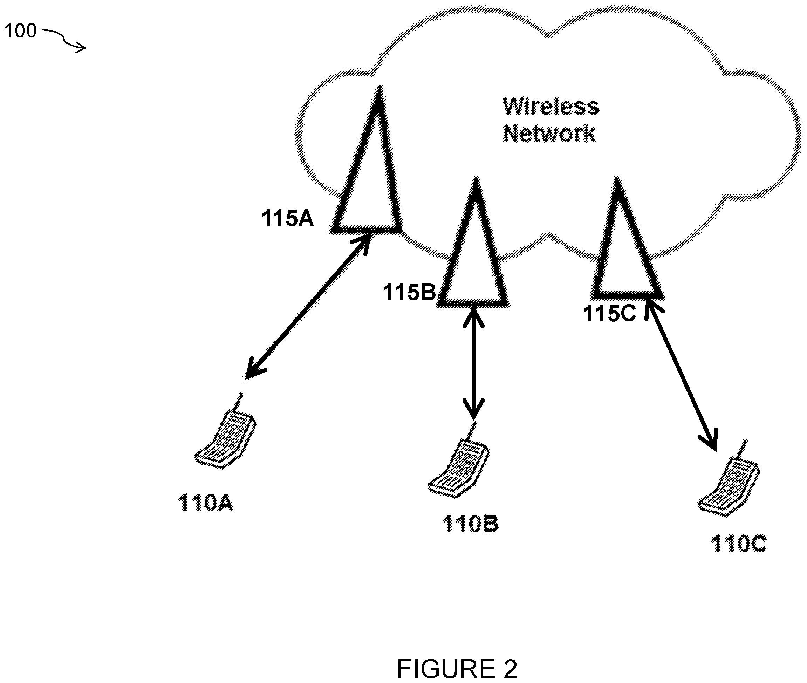

FIGURE 2 is a block diagram illustrating an embodiment of a network 100, in accordance with certain embodiments disclosed herein. Network 100 includes one or more UE(s) 110 (which may be interchangeably referred to as wireless devices 110 or simply device), network node(s) 115 (which may be interchangeably referred to as eNodeBs (eNBs) 115). UEs 110 may communicate with network nodes 115 over a wireless interface. For example, UE 110A may transmit wireless signals to one or more of network nodes 115, and/or receive wireless signals from one or more of network nodes 115. The wireless signals may contain voice traffic, data traffic, control signals, and/or any other suitable information. In some embodiments, an area of wireless signal coverage associated with a network node 115 may be referred to as a cell. In some embodiments, UEs 110 may have D2D capability. Thus, UEs 110 may be able to receive signals from and/or transmit signals directly to another UE. For example, UE 110A may be able to receive signals from and/or transmit signals to UE 110B.

In certain embodiments, network nodes 115 may interface with a radio network controller. The radio network controller may control network nodes 115 and may provide certain radio resource management functions, mobility management functions, and/or other suitable functions. In certain embodiments, the functions of the radio network controller may be performed by network node 115. The radio network controller may interface with a core network node. In certain embodiments, the radio network controller may interface with the core network node via an interconnecting network. The interconnecting network may refer to any interconnecting system capable of transmitting audio, video, signals, data, messages, or any combination of the preceding. The interconnecting network may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the core network node may manage the establishment of communication sessions and various other functionalities for UEs 110. UEs 110 may exchange certain signals with the core network node using the non-access stratum layer. In non-access stratum signaling, signals between UEs 110 and the core network node may be transparently passed through the radio access network. In certain embodiments, network nodes 115 may interface with one or more network nodes over an internode interface. For example, network nodes 115A and 115B may interface over an X2 interface.

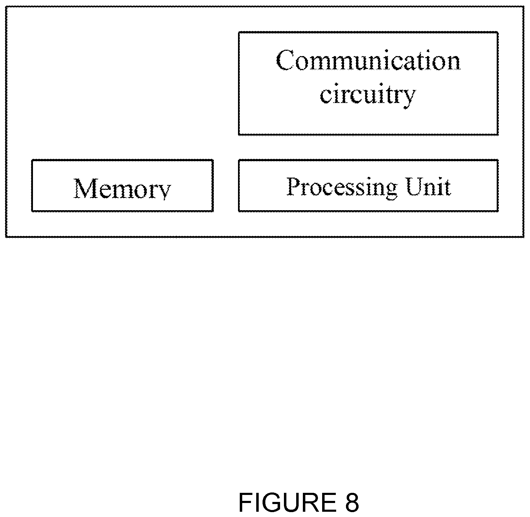

As described above, example embodiments of network 100 may include one or more wireless devices 110, and one or more different types of network nodes capable of communicating (directly or indirectly) with wireless devices 110. In some embodiments, the non-limiting term UE is used. UEs 110 described herein can be any type of wireless device capable of communicating with network nodes 115 or another UE over radio signals. UE 110 may also be a radio communication device, target device, device-to-device (D2D) UE, machine-type-communication UE or UE capable of machine to machine communication (M2M), a sensor-equipped UE, iPad, Tablet, mobile terminals, smart phone, laptop embedded equipped (LEE), laptop mounted equipment (LME), USB dongles, Customer Premises Equipment (CPE), etc. Also, in some embodiments generic terminology, "radio network node" (or simply "network node") is used. It can be any kind of network node, which may comprise a Node B, base station (BS), multi-standard radio (MSR) radio node such as MSR BS, eNode B, network controller, radio network controller (RNC), base station controller (BSC), relay donor node controlling relay, base transceiver station (BTS), access point (AP), transmission points, transmission nodes, RRU, RRH, nodes in distributed antenna system (DAS), core network node (e.g. MSC, MME etc), O&M, OSS, SON, positioning node (e.g. E-SMLC), MDT, or any suitable network node. Example embodiments of UEs 110, network nodes 115, and other network nodes (such as radio network controller or core network node) are described in more detail with respect to FIGURES 8-12.

Although FIGURE 2 illustrates a particular arrangement of network 100, the present disclosure contemplates that the various embodiments described herein may be applied to a variety of networks having any suitable configuration. For example, network 100 may include any suitable number of UEs 110 and network nodes 115, as well as any additional elements suitable to support communication between UEs or between a UE and another communication device (such as a landline telephone). Furthermore, although certain embodiments may be described as implemented in a long term evolution (LTE) network, the embodiments may be implemented in any appropriate type of telecommunication system supporting any suitable communication standards and using any suitable components, and are applicable to any radio access technology (RAT) or multi-RAT systems in which the UE receives and/or transmits signals (e.g., data). For example, the various embodiments described herein may be applicable to LTE, LTE-Advanced, UMTS, HSPA, GSM, cdma2000, WiMax, WiFi, another suitable radio access technology, or any suitable combination of one or more radio access technologies.

When introducing multiple measurement granularities/resolutions, then the mapping between a measurement and an encoded value also depends on the resolution R. Hence, the encoded value is a function of the measurement as well as the resolution:

$$Mr = f(M, R)$$

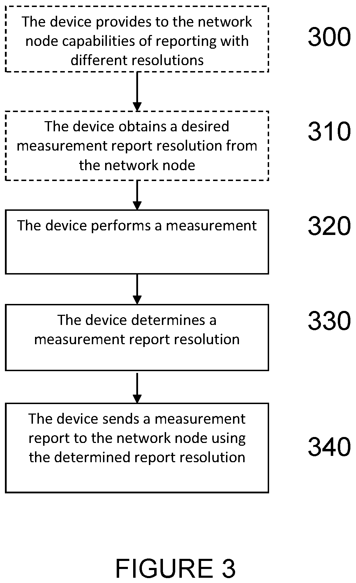

FIGURE 3 is a flow diagram of a method in a wireless device, in accordance with particular embodiments. The method begins at step 320, when the wireless device performs a measurement. According to particular embodiments, this measurement can be a positioning measurement, such as the various positioning measurements discussed herein. However, the embodiments are not limited to positioning measurements, and the method can be applied to any kind of feedback measurement. Next, at step 330, the wireless device may determine a measurement report resolution to be used for a measurement report. This determination may determine an appropriate report resolution based on a variety of criteria, including but not limited to estimated accuracy of the measurement. The various embodiments and details relating to this determination step will be discussed in more detail herein. Finally, at step 330, the wireless device sends the measurement report-encoded based on the determined measurement report resolution-to the network node. This measurement report may include or exclude information about the selected report resolution, as will be discussed in more detail.

According to additional embodiments, the method may involve additional optional communications between the wireless device and network node. For instance, at step 300, the wireless device optionally provides to the network node its capabilities for supporting a plurality of different report resolutions. According to particular embodiments, these different report resolutions may include, but are not limited to 5 Ts, 1 Ts, 0.5 Ts, and 0.25 Ts. One of skill in the art will recognize that additional report resolutions may be used. In particular embodiments, one of the supported report resolutions can be considered as a default report resolution. For example, the finest report resolution can act as such a default report resolution. However, other report resolutions may be set as the default report resolution.

According to additional embodiments, at step 310, the wireless device may optionally receive from the network node an indication about the desired report resolution. The device may agree with the indicated desired report resolution, or select a different report resolution. This process for making this selection will be discussed in more detail below.

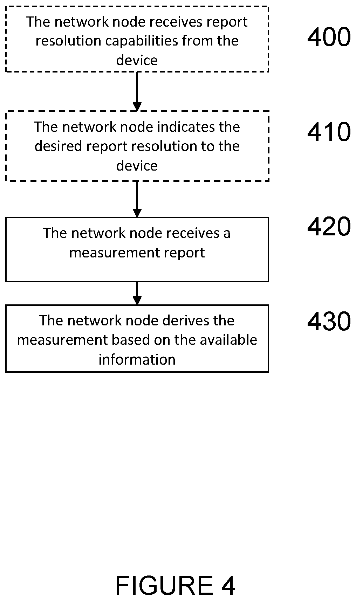

FIGURE 4 is a flow diagram of a method in a network node, in accordance with particular embodiments. At step 420, the network node receives, from a wireless device, a measurement report of a measurement performed by the wireless device. Then, at step 430, the network node derives the measurement from the measurement report based on available information relating to measurement report resolution. According to particular embodiments, this may include, but is not limited to, the supported report resolutions, desired report resolution, and selected report resolution.

According to additional embodiments, the method may involve additional optional communications between the wireless device and network node. For instance, at step 400 the network node optionally receives the plurality of supported report resolutions, possibly including a default report resolution from the device. As discussed above, the different report resolutions may include, but are not limited to 5 Ts, 1 Ts, 0.5 Ts, and 0.25 Ts. At step 410, the network node optionally indicates the desired report resolution to the device.

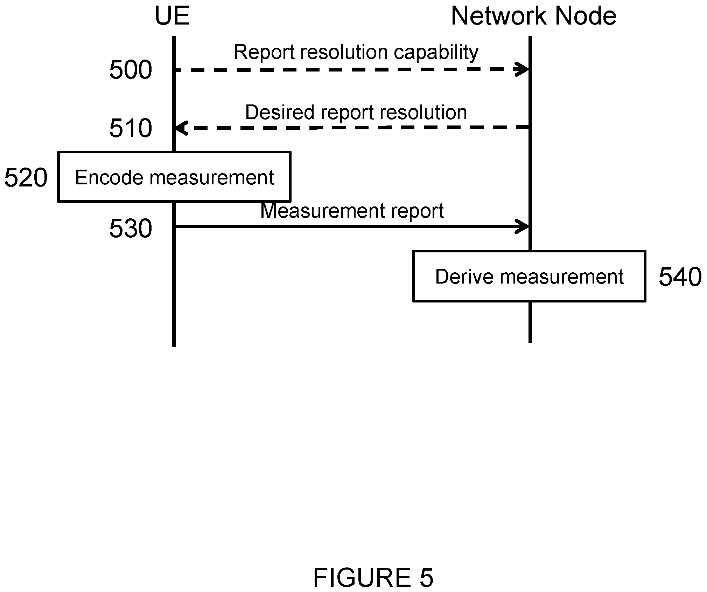

FIGURE 5 is a signal flow diagram, in accordance with certain embodiments. At step 500, the device optionally provides the report resolution capabilities, and in step 510 the network node optionally indicates the desired report resolution to the device. At step 520, the device encodes the measurement in consideration of a variety of factors. These may include, but are not limited to, the supported report resolution and the desired report resolution. At step 530, the device sends the measurement report. At step 540, the network node decodes the encoded measurement to derive the measurement in consideration of the available information relating to measurement report resolution, such as supported report resolution, the desired report resolution, and/or the selected report resolution.

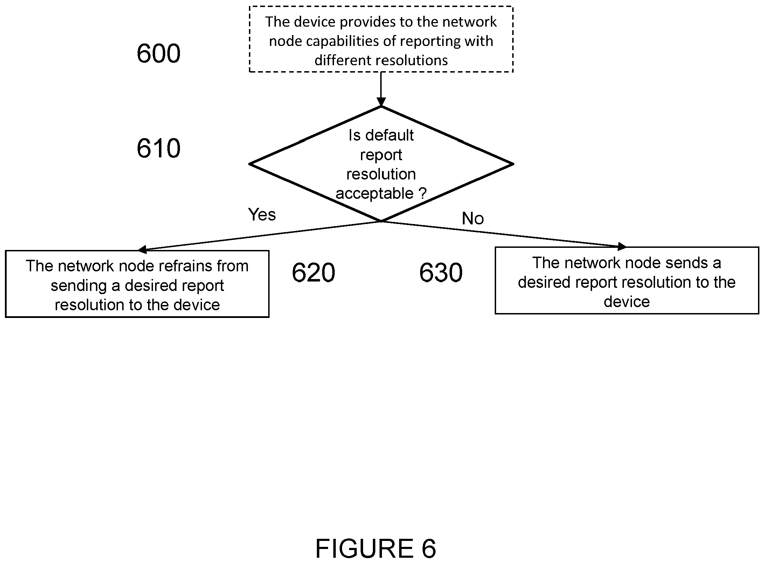

As mentioned previously, a network node may optionally indicate a desired measurement report resolution to the wireless device for encoding measurement reports. FIGURE 6 is a flow diagram of a choice made by the network node about whether it finds it necessary to indicate a desired report resolution to the device, in accordance with certain embodiments. At step 600, the network node optionally receives information about device capabilities concerning supported report resolutions. At step 610, the network node evaluates whether the supported report resolutions are acceptable and/or desirable. According to particular embodiments this evaluation may focus on the default report resolution. If acceptable, then the network node refrains from sending a desired report resolution to the device at step 620. According to certain embodiments, this occurs when the default value is deemed acceptable. According to alternative embodiments, this may occur when any one of the supported report resolutions is acceptable. According to still more alternative embodiments, this may only occur if all of the supported report resolutions are deemed acceptable.

If not acceptable, the network node sends a desired report resolution to the device at step 630. According to certain embodiments, this occurs when the default value is deemed not acceptable. According to alternative embodiments, this may occur when any one of the supported report resolutions is not acceptable. According to still more alternative embodiments, this may only occur if none of the supported report resolutions are deemed acceptable.

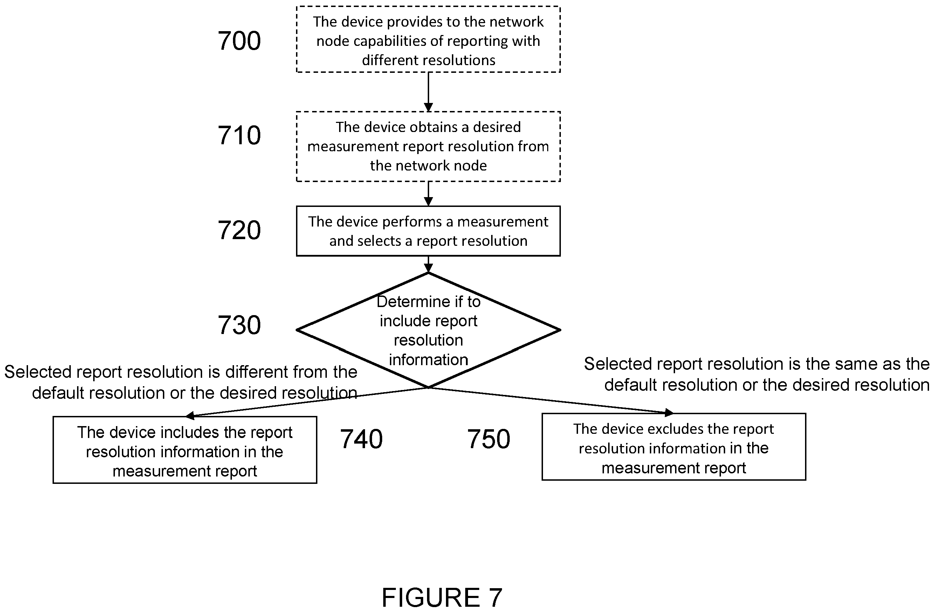

As mentioned previously, a wireless device may optionally include measurement report resolution information with the measurement report when it is sent to the network node. FIGURE 7 is a flow diagram of a choice made by the device about whether it needs to indicate the selected report resolution or not, in accordance with certain embodiments. At step 700, the device optionally provides the report resolution capabilities to the network node. At step 710, the device optionally receives from the network node an indication about the desired report resolution. The device may agree with the indicated desired report resolution, or select a different report resolution. For example, at step 720 the device may determine an appropriate report resolution based on the estimates accuracy of the measurement. At step 730, the device determines whether it needs to include the selected report resolution information. If the selected report resolution is different from the default report resolution and/or the desired report resolution, then at step 740 the device includes information about the selected report resolution in the measurement report. On the other hand, if the selected report resolution is the same as the default and/or desired report resolutions, then at step 750 the device excludes information about the selected report resolution in the measurement report. If both the device has sent the supported capability and the network node the desired report resolution, then the device will send the selected report resolution if it is different from the desired report resolution.

The measurements performed by the wireless device may be any suitable measurement. For example, the measurement may be a relative time difference measurement such as the RSTD or the UE Rx-Tx time difference, or a received signal strength measurement. It may also be a time measurement in general. Essentially, the present disclosure contemplates the use of any kind of feedback measurements.

The present disclosure contemplates various embodiments that enable a systematic approach for the location server to assist the device in selecting a proper measurement reporting resolution, and for the device to communicate its decision on the selection of measurement reporting resolution to the location server. The various embodiments described herein apply to general measurement report resolutions, but will be exemplified for RSTD measurements.

In one example embodiment, the selection of measurement reporting resolution is sent to the device as an assisted data. The selection mechanisms can be mandatory for the device, or it can be up to the device to use the indicated resolution or reject it (and choose its own preference). In one embodiment, the device will indicate its measurement reporting resolution in the feedback to the location server. In the case that the location server has sent a suggested measurement reporting resolution, the UE may be required to respond with the actually used resolution.

For example, in case of OTDOA, the IE *OTDOA-SignalMeasurementInformation* is used by the target device to provide RSTD measurements to the location server. In the following, methods are described on how to enable the UE to select a measurement reporting resolution.

## Measurement Reporting Resolution Selection

As discussed in the embodiments above, a UE may select a measurement report resolution to use based on various criteria. According to particular embodiments, the measurement reporting resolution selection strategy by the location server for a particular UE may comprise one or a combination of multiple of the following:

- an indication that the UE is under small cell coverage, especially small cells deployed indoors, where higher resolution is achievable and measurement value has small range;
- an indication that the UE is under macro cell coverage, and where a standard current resolution is adequate for the measurement accuracy;
- CRS (cell-specific reference signal) bandwidth of the serving cell on which measurement is done;

- PRS (positioning reference signal) bandwidth of the serving cell on which measurement is done;
- SRS (sounding reference signal) bandwidth of signals transmitted by the UE;
- Measured RSRP (reference signal received power) and RSRQ (reference signal received quality) results;
- a specific resolution selection due to a cost parameter.

While the capability of higher resolution reporting has been provided to the UE, there can be several different strategies on how to exploit this capability. In one embodiment, the UE may always use the indicated/desired reporting resolution. In another embodiment, the UE may select between several reporting resolution options. An optional attribute for the second case, would be to have rstd-Resolution to the OTDOA-SignalMeasurementInformation that indicates how to interpret the rstd value. In this way, the location server can map the report to the correct table.

### Signaling Support

To provide a proper support for having a higher resolution of RSTD measurements, there are four main aspects which should be considered:

1. To allow the reporting resolution to be 0.5Ts or even 0.25Ts, there should be some indication of capability from the UE via *OTDOA-ProvideCapabilities*.
2. Optionally, the location server may indicate to the UE which reporting resolution to use. This can be conveyed via *OTDOA-ProvideAssistanceData*, or via *OTDOA-RequestLocationInformation*
3. While above capability is provided and a specific report resolution may be requested, the UE may either use the indicated reporting resolution, or select between several resolution options. In case of the latter, there may need to be some indication in the *OTDOA-SignalMeasurementInformation* to inform about the selected resolution.
4. With finer reporting resolution, it makes sense to indicate the resulting *error-Value* with a more granular value, which for example could be indicated by a finer *error-Resolution.*

Each aspect is explained in more detail below with the corresponding required modification.

### 1. Providing capability information to the network node

The IE *OTDOA-ProvideCapabilities* is used by the target device to indicate its capability to support OTDOA and to provide its OTDOA positioning capabilities to the location server. This is the current information included in this signaling:

```
-- ASN1START

OTDOA-ProvideCapabilities ::= SEQUENCE {
    otdoa-Mode       BIT STRING {    ue-assisted (0) } (SIZE (1..8)),
    ...,
    supportedBandListEUTRA      SEQUENCE (SIZE (1..maxBands)) OF
SupportedBandEUTRA      OPTIONAL,
    supportedBandListEUTRA-v9a0 SEQUENCE (SIZE (1..maxBands)) OF SupportedBandEUTRA-v9a0
                                                                                OPTION
AL,
    interFreqRSTDmeasurement-r10       ENUMERATED { supported
}                 OPTIONAL,
    additionalNeighbourCellInfoList-r10 ENUMERATED { supported
}                 OPTIONAL
}

maxBands INTEGER ::= 64

SupportedBandEUTRA ::= SEQUENCE {
    bandEUTRA                       INTEGER (1..maxFBI)
}

SupportedBandEUTRA-v9a0 ::=    SEQUENCE {
    bandEUTRA-v9a0                   INTEGER (maxFBI-Plus1..maxFBI2)    OPTIONAL
}

maxFBI                          INTEGER ::= 64   -- Maximum value of frequency band
indicator
maxFBI-Plus1                    INTEGER ::= 65   -- lowest value extended FBI range
maxFBI2                         INTEGER ::= 256  -- highest value extended FBI range

-- ASN1STOP
```

7

The finer reporting can be introduced in the *OTDOA-ProvideCapabilities* by one of the following alternatives:

- Introduce one or more new otdoa-Modes, for example to indicate support for .5 Ts and .25 Ts
- Introduce a new capability for RSTD quantization
- Introduce a new capability for each entry in SupportedBandEUTRA,

## 2. Receiving a desired report resolution from the network node

The network node optionally may provide a desired report resolution to the device. The network node may request a specific report resolution based on the indicated capability from the device. For example, this can be specified as part of the *OTDOA-RequestLocationInformation*

```
-- ASN1START

OTDOA-RequestLocationInformation ::= SEQUENCE {
    assistanceAvailability       BOOLEAN,
    ...
}

-- ASN1STOP
```

Alternatively, it can be included in the OTDOA-ProvideAssistanceData;

```
-- ASN1START

OTDOA-ProvideAssistanceData ::= SEQUENCE {
    otdoa-ReferenceCellInfo OTDOA-ReferenceCellInfo OPTIONAL,    -- Need ON
    otdoa-NeighbourCellInfo OTDOA-NeighbourCellInfoList OPTIONAL,    -- Need ON
    otdoa-Error          OTDOA-Error          OPTIONAL,    -- Need ON
    ...
}

-- ASN1STOP
```

## 3. Including selected report resolution in the measurement report

The IE *OTDOA-SignalMeasurementInformation* is used by the target device to provide RSTD measurements to the location server.

```
-- ASN1START

OTDOA-SignalMeasurementInformation ::= SEQUENCE {
    systemFrameNumber       BIT STRING (SIZE (10)),
    physCellIdRef           INTEGER (0..503),
    cellGlobalIdRef         ECGI                    OPTIONAL,
    earfcnRef               ARFCN-ValueEUTRA        OPTIONAL,    -- Cond NotSameAsRef0
    referenceQuality        OTDOA-MeasQuality       OPTIONAL,
    neighbourMeasurementList    NeighbourMeasurementList,
    ...,
    [[ earfcnRef-v9a0        ARFCN-ValueEUTRA-v9a0   OPTIONAL    -- Cond NotSameAsRef1
    ]]
}

NeighbourMeasurementList ::= SEQUENCE (SIZE(1..24)) OF NeighbourMeasurementElement

NeighbourMeasurementElement ::= SEQUENCE {
    physCellIdNeighbour     INTEGER (0..503),
    cellGlobalIdNeighbour   ECGI                    OPTIONAL,
    earfcnNeighbour         ARFCN-ValueEUTRA        OPTIONAL,    -- Cond NotSameAsRef2
    rstd                    INTEGER (0..12711),
    rstd-Quality            OTDOA-MeasQuality,
    ...,
    [[ earfcnNeighbour-v9a0 ARFCN-ValueEUTRA-v9a0   OPTIONAL    -- Cond NotSameAsRef3
    ]]
}

-- ASN1STOP
```

The UE may follow either the best possible resolution as indicated in the capability or use the requested resolution from the location server. However, it may also opt to use a different resolution. Therefore, there is a need to indicate the considered report resolution to indicate how to interpret the rstd value. This indication can either be part of the *OTDOA-SignalMeasurementInformation* or part of the *NeighbourMeasurementElement.*

### 4. Indicating more granular error value

With OTDOA enhancements including higher quantization resolution and also considering the indoor scenarios, the minimum range of 0 to 4m error according to *OTDOA-MeasQuality* field descriptions seems to be large and by considering a finer reporting resolution, it makes sense to indicate the resulting *error-Value* with a more granular value, which for example could be indicated by a finer error-Resolution. For this purpose, the number of bits for *error-Resolution* can be changed from 2 to 3, and by this we have an option of having more error grouping. With this option we are not omitting anything which can be reported until now, but we will actually have the possibility to have more error resolution option.

```
-- ASN1START

OTDOA-MeasQuality ::= SEQUENCE {
    error-Resolution        BIT STRING (SIZE (2)),
    error-Value             BIT STRING (SIZE (5)),
    error-NumSamples        BIT STRING (SIZE (3))            OPTIONAL,
    ...
}

-- ASN1STOP
```

### Apparatus Example

FIGURE 8 illustrates an apparatus at the location server side, in accordance with certain embodiments. This disclosure is related to an apparatus to realize the various embodiments described herein. In certain embodiments, the apparatus describes a network node, arranged with communication circuitry to communicate with devices, memory to store information related to the invention, and a processing unit. The communication circuitry may be configured to receive device capabilities of supported report resolutions, send a desired report resolution to the device, receive a measurement report from the device. The communication circuitry sends and receives information to/from the processing unit and memory.

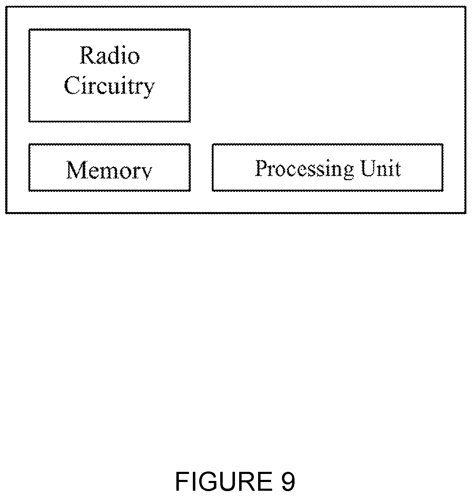

FIGURE 9 illustrates an apparatus at the device side, in accordance with certain embodiments. The disclosure is related to an apparatus to realize the various embodiments described herein. In certain embodiments, the apparatus describes a device, arranged with radio circuitry to communicate with a network node via a serving base station, memory to store information related to the invention, and a processing unit.

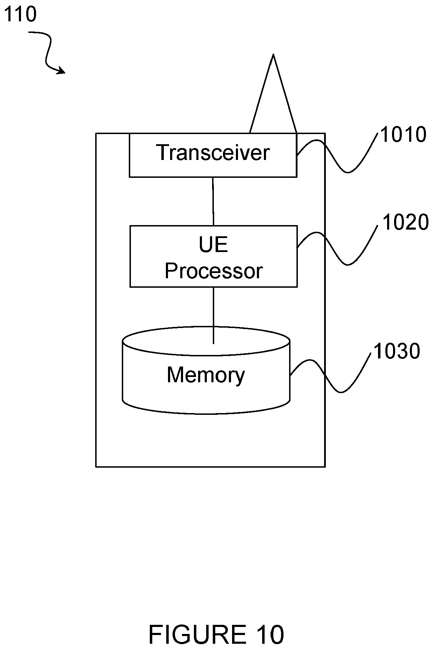

FIGURE 10 is a block schematic of an exemplary wireless device 110, in accordance with certain embodiments. Wireless device 110 may refer to any type of wireless device communicating with a node and/or with another wireless device in a cellular or mobile communication system. Examples of wireless device 110 include a mobile phone, a smart phone, a PDA (Personal Digital Assistant), a portable computer (e.g., laptop, tablet), a sensor, a modem, a machine-type-communication (MTC) device / machine-to-machine (M2M) device, laptop embedded equipment (LEE), laptop mounted equipment (LME), USB dongles, a D2D capable device, or another device that can provide wireless communication. A wireless device 110 may also be referred to as UE, a station (STA), a device, or a terminal in some embodiments. Wireless device 110 includes transceiver 1010, processor 1020, and memory 1030. In some embodiments, transceiver 1010 facilitates transmitting wireless signals to and receiving wireless signals from network node 115 (e.g., via an antenna), processor 1020 executes instructions to provide some or all of the functionality described above as being provided by wireless device 110, and memory 1030 stores the instructions executed by processor 1020.

Processor 1020 may include any suitable combination of hardware and software implemented in one or more modules to execute instructions and manipulate data to perform some or all of the described functions of wireless device 110. In some embodiments, processor 1020 may include, for example, one or more computers, one or more central processing units (CPUs), one or more microprocessors, one or more applications, circuitry, and/or other logic.

Memory 1030 is generally operable to store instructions, such as a computer program, software, an application including one or more of logic, rules, algorithms, code, tables, etc. and/or other instructions capable of being executed by a processor. Examples of memory 1030 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

Other embodiments of wireless device 110 may include additional components beyond those shown in FIGURE 10 that may be responsible for providing certain aspects of the wireless device's functionality, including any of the functionality described above and/or any additional functionality (including any functionality necessary to support the solution described above).

In certain embodiments, wireless device 110 may include one or more modules. For example, wireless device 110 may include a determining module, a communication module, a receiver module, an input module, a display module, and any other suitable modules. The determining module may perform the processing functions of wireless device 110. The determining module may include or be included in processor 1020. The determining module may include analog and/or digital circuitry configured to perform any of the functions of the determining module and/or processor 1020. The functions of the determining module described above may, in certain embodiments, be performed in one or more distinct modules.

The communication module may perform the transmission functions of wireless device 110. The communication module may transmit messages to one or more of network nodes 115 of network 100. The communication module may include a transmitter and/or a transceiver, such as transceiver 1010. The communication module may include circuitry configured to wirelessly transmit messages and/or signals. In particular embodiments, the communication module may receive messages and/or signals for transmission from the determining module.

The receiving module may perform the receiving functions of wireless device 110. The receiving module may include a receiver and/or a transceiver. The receiving module may include circuitry configured to wirelessly receive messages and/or signals. In particular embodiments, the receiving module may communicate received messages and/or signals to the determining module.

The input module may receive user input intended for wireless device 110. For example, the input module may receive key presses, button presses, touches, swipes, audio signals, video signals, and/or any other appropriate signals. The input module may include one or more keys, buttons, levers, switches, touchscreens, microphones, and/or cameras. The input module may communicate received signals to the determining module.

The display module may present signals on a display of wireless device 110. The display module may include the display and/or any appropriate circuitry and hardware configured to present signals on the display. The display module may receive signals to present on the display from the determining module.

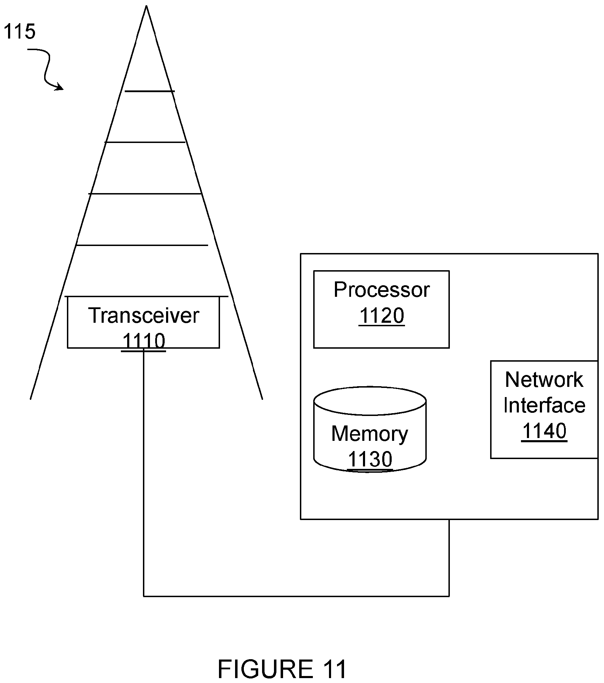

FIGURE 11 is a block schematic of an exemplary network node 115, in accordance with certain embodiments. Network node 115 may be any type of radio network node or any network node that communicates with a UE and/or with another network node. Examples of network node 115 include an eNodeB, a node B, a base station, a wireless access point (e.g., a Wi-Fi access point), a low power node, a base transceiver station (BTS), relay, donor node controlling relay, transmission points, transmission nodes, remote RF unit (RRU), remote radio head (RRH), multi-standard radio (MSR) radio node such as MSR BS, nodes in distributed antenna system (DAS), O&M, OSS, SON, positioning node (e.g., E-SMLC), MDT, or any other suitable network node. Network nodes 115 may be deployed throughout network 100 as a homogenous deployment, heterogeneous deployment, or mixed deployment. A homogeneous deployment may generally describe a deployment made up of the same (or similar) type of network nodes 115 and/or similar coverage and cell sizes and inter-site distances. A heterogeneous deployment may generally describe deployments using a variety of types of network nodes 115 having different cell sizes, transmit powers, capacities, and inter-site distances. For example, a heterogeneous deployment may include a plurality of low-power nodes placed throughout a macro-cell layout. Mixed deployments may include a mix of homogenous portions and heterogeneous portions.

Network node 115 may include one or more of transceiver 1110, processor 1120, memory 1130, and network interface 1140. In some embodiments, transceiver 1110 facilitates transmitting wireless signals to and receiving wireless signals from wireless device 110 (e.g., via an antenna), processor 1120 executes instructions to provide some or all of the functionality described above as being provided by a network node 115, memory 1130 stores the instructions executed by processor 1120, and network interface 1140 communicates signals to backend network components, such as a gateway, switch, router, Internet, Public Switched Telephone Network (PSTN), core network nodes or radio network controllers 130, etc.

Processor 1120 may include any suitable combination of hardware and software implemented in one or more modules to execute instructions and manipulate data to perform some or all of the described functions of network node 115. In some embodiments, processor 1120 may include, for example, one or more computers, one or more central processing units (CPUs), one or more microprocessors, one or more applications, circuitry, and/or other logic.

Memory 1130 is generally operable to store instructions, such as a computer program, software, an application including one or more of logic, rules, algorithms, code, tables, etc. and/or other instructions capable of being executed by a processor. Examples of memory 1130 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 1140 is communicatively coupled to processor 1120 and may refer to any suitable device operable to receive input for network node 115, send output from network node 115, perform suitable processing of the input or output or both, communicate to other devices, or any combination of the preceding.

Network interface 1140 may include appropriate hardware (e.g., port, modem, network interface card, etc.) and software, including protocol conversion and data processing capabilities, to communicate through a network.

In certain embodiments, network node 115 may include a determining module, a communication module, a receiving module, and any other suitable modules. In some embodiments, one or more of the determining module, communication module, receiving module, or any other suitable module may be implemented using one or more processors 1120 of FIGURE 11. In certain embodiments, the functions of two or more of the various modules may be combined into a single module.

The determining module may perform the processing functions of network node 115. The determining module may include or be included in processor 1120. The determining module may include analog and/or digital circuitry configured to perform any of the functions of the determining module and/or processor 1120. The functions of the determining module may, in certain embodiments, be performed in one or more distinct modules.

The communication module may perform the transmission functions of network node 115. The communication module may transmit messages to one or more of wireless devices 110. The communication module may include a transmitter and/or a transceiver, such as transceiver 1110. The communication module may include circuitry configured to wirelessly transmit messages and/or signals. In particular embodiments, the communication module may receive messages and/or signals for transmission from the determining module or any other module.

The receiving module may perform the receiving functions of network node 115. The receiving module may receive any suitable information from a wireless device. The receiving module may include a receiver and/or a transceiver. The receiving module may include circuitry configured to wirelessly receive messages and/or signals. In particular embodiments, the receiving module may communicate received messages and/or signals to the determining module or any other suitable module.

Other embodiments of network node 115 may include additional components beyond those shown in FIGURE 11 that may be responsible for providing certain aspects of the radio network node's functionality, including any of the functionality described above and/or any additional functionality (including any functionality necessary to support the solutions described above). The various different types of network nodes may include components having the same physical hardware but configured (e.g., via programming) to support different radio access technologies, or may represent partly or entirely different physical components.

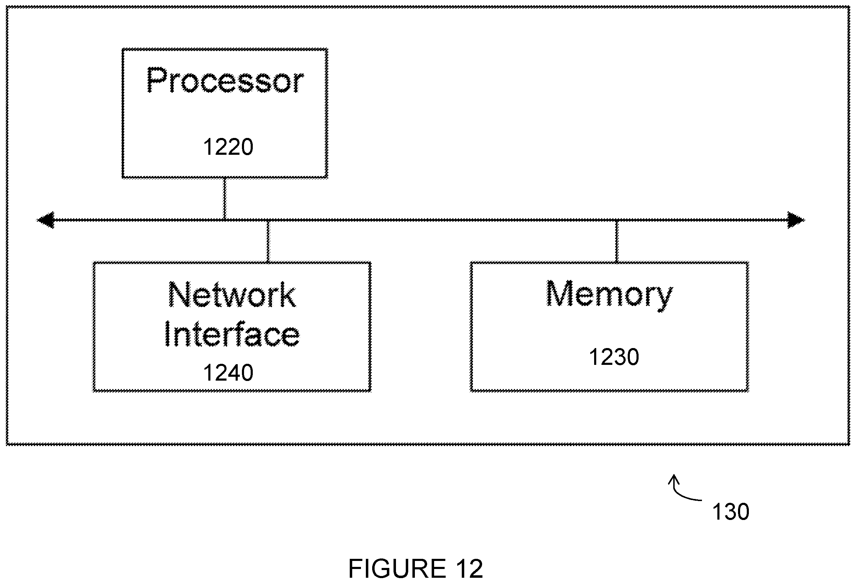

FIGURE 12 is a block schematic of an exemplary radio network controller or core network node 130, in accordance with certain embodiments. Examples of network nodes can include a mobile switching center (MSC), a serving GPRS support node (SGSN), a mobility management entity (MME), a radio network controller (RNC), a base station controller (BSC), and so on. The radio network controller or core network node 130 include processor 1220, memory 1230, and network interface 1240. In some embodiments, processor 1220 executes instructions to provide some or all of the functionality described above as being provided by the network node, memory 1230 stores the instructions executed by processor 1220, and network interface 1240 communicates signals to any suitable node, such as a gateway, switch, router, Internet, Public Switched Telephone Network (PSTN), network nodes 115, radio network controllers or core network nodes 130, etc.

Processor 1220 may include any suitable combination of hardware and software implemented in one or more modules to execute instructions and manipulate data to perform some or all of the described functions of the radio network controller or core network node 130. In some embodiments, processor 1220 may include, for example, one or more computers, one or more central processing units (CPUs), one or more microprocessors, one or more applications, and/or other logic.

Memory 1230 is generally operable to store instructions, such as a computer program, software, an application including one or more of logic, rules, algorithms, code, tables, etc. and/or other instructions capable of being executed by a processor. Examples of memory 1230 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 1240 is communicatively coupled to processor 1220 and may refer to any suitable device operable to receive input for the network node, send output from the network node, perform suitable processing of the input or output or both, communicate to other devices, or any combination of the preceding. Network interface 1240 may include appropriate hardware (e.g., port, modem, network interface card, etc.) and software, including protocol conversion and data processing capabilities, to communicate through a network.

Other embodiments of the network node may include additional components beyond those shown in FIGURE 12 that may be responsible for providing certain aspects of the network node's functionality, including any of the functionality described above and/or any additional functionality (including any functionality necessary to support the solution described above).

Certain embodiments of the present disclosure may provide one or more technical advantages. For example, by introducing an adaptive measurement reporting, the UE can adapt the report mapping by selecting one out of the pre-defined mappings based on the suggested resolution parameters. As another example, the efficient RSTD quantization and measurement reporting will provide possibility of improved positioning accuracy. Other advantages may be readily apparent to one having skill in the art. Certain embodiments may have none, some, or all of the recited advantages.

Modifications, additions, or omissions may be made to the systems and apparatuses described herein without departing from the scope of the disclosure. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods described herein without departing from the scope of the disclosure. The methods may include more, fewer, or other steps. Additionally, steps may be performed in any suitable order.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of this disclosure, as defined by the following claims.

Abbreviations used in the preceding description include:

| | |
|---|---|
| ECID | Enhanced Cell ID |
| E-SMLC | Evolved-Serving Mobile Location Centre |
| LOS | Line Of Site |
| OTDOA | Observed Time Difference Of Arrival |
| RSTD | Reference Signal Time Difference |
| TDOA | Time Difference of Arrival |
| TOA | Time of Arrival |

**Claims**

1. A method performed by a wireless device (110) for adapting measurement report resolution, the method comprising:

   performing (320, 720) a measurement;
   determining (330, 720) a measurement report resolution to be used; and
   sending (340) a measurement report to the network node (115) encoded based on the determined measurement report resolution;
   wherein if the measurement report resolution to be used is different from a desired measurement report resolution received from the network node (115) or a default measurement report resolution, the measurement report includes (740) an indication of the measurement report resolution used; and
   if the measurement report resolution to be used is the same as the desired measurement report resolution received from the network node (115) or the default measurement report resolution, the measurement report excludes (750) an indication of the measurement report resolution used.

2. A method performed by a network node (115) for adapting measurement report resolution, the method comprising:

   receiving (420) a measurement report of a measurement from a wireless device (110); and
   deriving (430) the measurement based on available information relating to measurement report resolution;
   wherein if the measurement report is encoded based on a measurement report resolution, selected by the wireless device (110), that is different from a desired measurement report resolution or a default measurement report resolution, the measurement report includes an indication of the measurement report resolution used by the wireless device (110); and
   if the measurement report is encoded based on a measurement report resolution that is the same as the desired measurement report resolution or the default measurement report resolution, the measurement report excludes an indication of the measurement report resolution used by the wireless device (110).

3. A wireless device (110) for adapting measurement report resolution, the wireless device (110) comprising:

   processing circuitry (1020); and
   a memory (1030), the memory (1030) containing instructions executable by the processing circuitry (1020), whereby said wireless device (110) is operative to:

perform (320, 720) a measurement;
determine (330, 720) a measurement report resolution to be used; and
send (340) a measurement report to the network node (115) encoded based on the determined measurement report resolution;
wherein if the measurement report resolution to be used is different from a desired measurement report resolution received from the network node (115) or a default measurement report resolution, the measurement report includes (740) an indication of the measurement report resolution used; and

if the measurement report resolution to be used is the same as the desired measurement report resolution received from the network node (115) or the default measurement report resolution, the measurement report excludes (750) an indication of the measurement report resolution used.

4. The wireless device (110) according to claim 3, wherein determination (330, 720) of the measurement report resolution to be used further comprises selecting one measurement report resolution from a plurality of different measurement report resolutions.

5. The wireless device (110) according to claim 4, wherein the wireless device (110) is further operative, prior to determining (330, 720) the measurement report resolution to be used, to inform (300, 700) the network node (115) of the wireless device's capabilities of sending measurement reports encoded based on the plurality of different measurement report resolutions.

6. The wireless device (110) according to claim 5, wherein the plurality of different measurement report resolutions applicable for a measurement report comprises at least two of 5 Ts, 1 Ts, 0.5 Ts, and 0.25 Ts, optionally wherein one of the plurality of different measurement report resolutions is considered as the default measurement report resolution.

7. The wireless device (110) according to claim 5, wherein the wireless device (110) is further operative, subsequent to informing (300, 700) the network node (115) of the wireless device's capabilities, and prior to determining (330, 720) the measurement report resolution to be used, to receive (310, 710) a desired measurement report resolution from the network node (115).

8. The wireless device (110) according to claim 7, wherein the desired measurement report resolution is based on one or more of the following:

an indication that the wireless device (110) is under small cell coverage;
an indication that the wireless device (110) is under macro cell coverage;
cell-specific reference signal (CRS) bandwidth on a serving cell on which the measurement is performed;
positioning reference signal (PRS) bandwidth on the serving cell on which the measurement is performed;
sounding reference signal (SRS) bandwidth of signals transmitted by the wireless device (110);
measured reference signal received power (RSRP) and reference signal received quality (RSRQ) results; and
cost parameters.

9. A network node (115) for adapting measurement report resolution, the network node (115) comprising:

processing circuitry (1120); and
a memory (1130), the memory (1130) containing instructions executable by the processing circuitry (1120), whereby said network node (115) is operative to:

receive (420) a measurement report of a measurement from a wireless device (110); and
derive (430) the measurement based on available information relating to measurement report resolution;
wherein if the measurement report is encoded based on a measurement report resolution, selected by the wireless device (110), that is different from a desired measurement report resolution or a default measurement report resolution, the measurement report includes an indication of the measurement report resolution used by the wireless device (110); and
if the measurement report is encoded based on a measurement report resolution that is the same as the desired measurement report resolution or the default measurement report resolution, the measurement report excludes an indication of the measurement report resolution used by the wireless device (110).

10. The network node (115) according to claim 9, wherein the measurement report resolution to be used is selected by the wireless device (110) from a plurality of different measurement report resolutions.

11. The network node (115) according to claim 10, wherein the network node (115) is further operative, prior to receiving (420) the measurement report, to receive (400), from the wireless device (110), the wireless device's capabilities of sending measurement reports encoded based on the plurality of different measurement report resolutions.

12. The network node (115) according to claim 11, wherein the plurality of different measurement report resolutions applicable for a measurement report comprises at least two of 5 Ts, 1 Ts, 0.5 Ts, and 0.25 Ts, optionally wherein one of the plurality of different measurement report resolutions is considered as a default measurement report resolution.

13. The network node (115) according to claim 11, wherein the network node (115) is further operative, subsequent to receiving (400) the wireless device's capabilities, and prior to receiving (420) the measurement report, to send (410) a desired measurement report resolution to the wireless device (110).

14. The network node (115) according to claim 13, wherein the desired measurement report resolution is based on one or more of the following:

   an indication that the wireless device (110) is under small cell coverage;
   an indication that the wireless device (110) is under macro cell coverage;
   cell-specific reference signal (CRS) bandwidth on a serving cell on which the measurement is performed;
   positioning reference signal (PRS) bandwidth on the serving cell on which the measurement is performed;
   sounding reference signal (SRS) bandwidth of signals transmitted by the wireless device (110);
   measured reference signal received power (RSRP) and reference signal received quality (RSRQ) results; and
   cost parameters.

15. A network (100) comprising at least one of a wireless device according to claim 3 and a network node (115) according to claim 9.


**Patentansprüche**

1. Verfahren, das von einer drahtlosen Vorrichtung (110) durchgeführt wird, zur Anpassung von Messberichtsauflösung, wobei das Verfahren umfasst:

   Durchführen (320, 720) einer Messung;
   Bestimmen (330, 720) einer zu verwendenden Messberichtsauflösung; und
   Senden (340) eines Messberichts, der basierend auf der bestimmten Messberichtsauflösung codiert ist, an den Netzwerkknoten (115);
   wobei, wenn die zu verwendende Messberichtsauflösung von einer gewünschten Messberichtsauflösung, die vom Netzwerkknoten (115) empfangen wird, oder einer Standard-Messberichtsauflösung verschieden ist, der Messbericht eine Angabe der verwendeten Messberichtsauflösung einschließt (740); und,
   wenn die zu verwendende Messberichtsauflösung gleich wie die gewünschte Messberichtsauflösung, die vom Netzwerkknoten (115) empfangen wird, oder die Standard-Messberichtsauflösung ist, der Messbericht eine Angabe der verwendeten Messberichtsauflösung ausschließt (750).

2. Verfahren, das von einem Netzwerkknoten (115) durchgeführt wird, zur Anpassung von Messberichtsauflösung, wobei das Verfahren umfasst:

   Empfangen (420) eines Messberichts einer Messung von einer drahtlosen Vorrichtung (110), und
   Ableiten (430) der Messung basierend auf verfügbaren Informationen in Bezug auf Messberichtsauflösung;
   wobei, wenn der Messbericht basierend auf einer Messberichtsauflösung codiert ist, die von der drahtlosen Vorrichtung (110) ausgewählt wird und die von einer gewünschten Messberichtsauflösung oder einer Standard-Messberichtsauflösung verschieden ist, der Messbericht eine Angabe der von der drahtlosen Vorrichtung (110) verwendeten Messberichtsauflösung einschließt; und,

wenn der Messbericht basierend auf einer Messberichtsauflösung codiert ist, die gleich wie die gewünschte Messberichtsauflösung oder die Standard-Messberichtsauflösung ist, der Messbericht eine Angabe der von der drahtlose Vorrichtung (110) verwendeten Messberichtsauflösung ausschließt.

3. Drahtlose Vorrichtung (110) zum Anpassen von Messberichtsauflösung, wobei die drahtlose Vorrichtung (110) umfasst:

eine Verarbeitungsschaltungsanordnung (1020); und
einen Speicher (1030), wobei der Speicher (1030) Anweisungen enthält, die von der Verarbeitungsschaltungsanordnung (1020) ausgeführt werden können, wodurch die drahtlose Vorrichtung (110) ausgelegt ist zum:

Durchführen (320, 720) einer Messung;
Bestimmen (330, 720) einer zu verwendenden Messberichtsauflösung; und
Senden (340) eines Messberichts, der basierend auf der bestimmten Messberichtsauflösung codiert ist, an den Netzwerkknoten (115);

wobei, wenn die zu verwendende Messberichtsauflösung von einer gewünschten Messberichtsauflösung, die vom Netzwerkknoten (115) empfangen wird, oder einer Standard-Messberichtsauflösung verschieden ist, der Messbericht eine Angabe der verwendeten Messberichtsauflösung einschließt (740); und,
wenn die zu verwendende Messberichtsauflösung gleich wie die gewünschte Messberichtsauflösung, die vom Netzwerkknoten (115) empfangen wird, oder die Standard-Messberichtsauflösung ist, der Messbericht eine Angabe der verwendeten Messberichtsauflösung ausschließt (750).

4. Drahtlose Vorrichtung (110) nach Anspruch 3, wobei die Bestimmung (330, 720) der zu verwendenden Messberichtsauflösung ferner ein Auswählen einer Messberichtsauflösung aus einer Mehrzahl von verschiedenen Messberichtsauflösungen umfasst.

5. Drahtlose Vorrichtung (110) nach Anspruch 4, wobei die drahtlose Vorrichtung (110) ferner so ausgelegt ist, dass sie vor dem Bestimmen (330, 720) der zu verwendenden Messberichtsauflösung den Netzwerkknoten (115) über die Fähigkeiten der drahtlosen Vorrichtung zum Senden von Messberichten informiert (300, 700), die basierend auf der Mehrzahl von verschiedenen Messberichtsauflösungen codiert sind.

6. Drahtlose Vorrichtung (110) nach Anspruch 5, wobei die Mehrzahl von verschiedenen Messberichtsauflösungen, die für einen Messbericht angewendet werden können, mindestens zwei von 5 Ts, 1 Ts, 0,5 Ts und 0,25 Ts umfassen, wobei optional eine der Mehrzahl von verschiedenen Messberichtsauflösungen als die Standard-Messberichtsauflösung angesehen wird.

7. Drahtlose Vorrichtung (110) nach Anspruch 5, wobei die drahtlose Vorrichtung (110) ferner so ausgelegt ist, dass sie nach dem Informieren (300, 700) des Netzwerkknotens (115) über die Fähigkeiten der drahtlosen Vorrichtung und vor dem Bestimmen (330, 720) der zu verwendenden Messberichtsauflösung eine gewünschte Messberichtsauflösung vom Netzwerkknoten (115) empfängt (310, 710).

8. Drahtlose Vorrichtung (110) nach Anspruch 7, wobei die gewünschte Messberichtsauflösung auf einer oder mehreren von Folgenden basiert:

einer Abgabe, dass die drahtlose Vorrichtung (110) unter Versorgung einer kleinen Zelle ist;
einer Angabe, dass die drahtlose Vorrichtung (110) unter Versorgung einer Makrozelle ist;
zellspezifischer Referenzsignal (CRS)-Bandbreite in einer versorgenden Zelle, in welcher die Messung durchgeführt wird;
Positionsbestimmungsreferenzsignal (PRS)-Bandbreite in der versorgenden Zelle, in welcher die Messung durchgeführt wird;
Sondierungsreferenzsignal (SRS)-Bandbreite von Signalen, die durch die drahtlose Vorrichtung (110) gesendet werden;
Referenzsignalsempfangsleistungs (RSRP)- und Referenzsignalempfangsqualitäts (RSRQ)-Messergebnisse; und
Kostenparameter.

9. Netzwerkknoten (115) zum Anpassen von Messberichtsauflösung, wobei der Netzwerkknoten (115) umfasst:

eine Verarbeitungsschaltungsanordnung (1120); und

einen Speicher (1130), wobei der Speicher (1130) Anweisungen enthält, die von der Verarbeitungsschaltungsanordnung (1120) ausgeführt werden können, wodurch der Netzwerkknoten (115) ausgelegt ist zum:

Empfangen (420) eines Messberichts einer Messung von einer drahtlosen Vorrichtung (110), und
Ableiten (430) der Messung basierend auf verfügbaren Informationen in Bezug auf Messberichtsauflösung;

wobei, wenn der Messbericht basierend auf einer Messberichtsauflösung codiert ist, die von der drahtlosen Vorrichtung (110) ausgewählt wird und die von einer gewünschten Messberichtsauflösung oder einer Standard-Messberichtsauflösung verschieden ist, der Messbericht eine Angabe der von der drahtlosen Vorrichtung (110) verwendeten Messberichtsauflösung einschließt; und,

wenn der Messbericht basierend auf einer Messberichtsauflösung codiert ist, die gleich wie die gewünschte Messberichtsauflösung oder die Standard-Messberichtsauflösung ist, der Messbericht eine Angabe der von der drahtlosen Vorrichtung (110) verwendeten Messberichtsauflösung ausschließt.

10. Netzwerkknoten (115) nach Anspruch 9, wobei die zu verwendende Messberichtsauflösung durch die drahtlose Vorrichtung (110) aus einer Mehrzahl von verschiedenen Messberichtsauflösungen ausgewählt wird.

11. Netzwerkknoten (115) nach Anspruch 10, wobei der Netzwerkknoten (115) ferner so ausgelegt ist, dass er vor dem Empfangen (420) des Messberichts von der drahtlosen Vorrichtung (110) Fähigkeiten der drahtlosen Vorrichtung zum Senden von Messberichten empfängt (400), die basierend auf der Mehrzahl von verschiedenen Messberichtsauflösungen codiert sind.

12. Netzwerkknoten (115) nach Anspruch 11, wobei die Mehrzahl von verschiedenen Messberichtsauflösungen, die für einen Mesbericht angewendet werden können, mindestens zwei von 5 Ts, 1 Ts, 0,5 Ts und 0,25 Ts umfassen, wobei optional eine der Mehrzahl von verschiedenen Messberichtsauflösungen als a Standard-Messberichtsauflösung angesehen wird.

13. Netzwerkknoten (115) nach Anspruch 11, wobei der Netzwerkknoten (115) ferner so ausgelegt ist, dass er nach dem Empfangen (400) der Fähigkeiten der drahtlosen Vorrichtung und vor dem Empfangen (420) des Messberichts eine gewünschte Messberichtsauflösung an die drahtlose Vorrichtung (110) sendet (410).

14. Netzwerkknoten (115) nach Anspruch 13, wobei die gewünschte Messberichtsauflösung auf einer oder mehreren von Folgenden basiert:

einer Abgabe, dass die drahtlose Vorrichtung (110) unter Versorgung einer kleinen Zelle ist;
einer Angabe, dass die drahtlose Vorrichtung (110) unter Versorgung einer Makrozelle ist;
zellspezifischer Referenzsignal (CRS)-Bandbreite in einer versorgenden Zelle, in welcher die Messung durchgeführt wird;
Positionsbestimmungsreferenzsignal (PRS)-Bandbreite in der versorgenden Zelle, in welcher die Messung durchgeführt wird;
Sondierungsreferenzsignal (SRS)-Bandbreite von Signalen, die durch die drahtlose Vorrichtung (110) gesendet werden;
Referenzsignalsempfangsleistungs (RSRP)- und Referenzsignalempfangsqualitäts (RSRQ)-Messergebnisse; und
Kostenparameter.

15. Netzwerk (100), umfassend mindestens eine drahtlose Vorrichtung nach Anspruch 3 und einen Netzwerkknoten (115) nach Anspruch 9.

**Revendications**

1. Procédé effectué par un dispositif sans fil (110) pour adapter une résolution de rapport de mesure, le procédé comprenant :

l'exécution (320, 720) d'une mesure ;
la détermination (330, 720) d'une résolution de rapport de mesure à utiliser ; et

l'envoi (340) d'un rapport de mesure au nœud de réseau (115) codé sur la base de la résolution de rapport de mesure déterminée ;

dans lequel, si la résolution de rapport de mesure à utiliser est différente d'une résolution de rapport de mesure souhaitée reçue en provenance du nœud de réseau (115) ou d'une résolution de rapport de mesure par défaut, le rapport de mesure inclut (740) une indication de la résolution de rapport de mesure utilisée ; et

si la résolution de rapport de mesure à utiliser est la même que la résolution de rapport de mesure souhaitée reçue en provenance du nœud de réseau (115) ou que la résolution de rapport de mesure par défaut, le rapport de mesure exclut (750) une indication de la résolution de rapport de mesure utilisée.

2. Procédé effectué par un nœud de réseau (115) pour adapter une résolution de rapport de mesure, le procédé comprenant :

la réception (420) d'un rapport de mesure d'une mesure en provenance d'un dispositif sans fil (110) ; et
la dérivation (430) de la mesure sur la base d'informations disponibles relatives à une résolution de rapport de mesure ;

dans lequel, si le rapport de mesure est codé sur la base d'une résolution de rapport de mesure, sélectionnée par le dispositif sans fil (110), qui est différente d'une résolution de rapport de mesure souhaitée ou d'une résolution de rapport de mesure par défaut, le rapport de mesure inclut une indication de la résolution de rapport de mesure utilisée par le dispositif sans fil (110) ; et

si le rapport de mesure est codé sur la base d'une résolution de rapport de mesure qui est la même que la résolution de rapport de mesure souhaitée ou que la résolution de rapport de mesure par défaut, le rapport de mesure exclut une indication de la résolution de rapport de mesure utilisée par le dispositif sans fil (110) .

3. Dispositif sans fil (110) permettant d'adapter une résolution de rapport de mesure, le dispositif sans fil (110) comprenant :

une circuiterie de traitement (1020) ; et
une mémoire (1030), la mémoire (1030) contenant des instructions exécutables par la circuiterie de traitement (1020), de telle manière que ledit dispositif sans fil (110) soit opérationnel pour effectuer :

l'exécution (320, 720) d'une mesure ;
la détermination (330, 720) d'une résolution de rapport de mesure à utiliser ; et
l'envoi (340) d'un rapport de mesure au nœud de réseau (115) codé sur la base de la résolution de rapport de mesure déterminée ;

dans lequel, si la résolution de rapport de mesure à utiliser est différente d'une résolution de rapport de mesure souhaitée reçue en provenance du nœud de réseau (115) ou d'une résolution de rapport de mesure par défaut, le rapport de mesure inclut (740) une indication de la résolution de rapport de mesure utilisée ; et

si la résolution de rapport de mesure à utiliser est la même que la résolution de rapport de mesure souhaitée reçue en provenance du nœud de réseau (115) ou que la résolution de rapport de mesure par défaut, le rapport de mesure exclut (750) une indication de la résolution de rapport de mesure utilisée.

4. Dispositif sans fil (110) selon la revendication 3, dans lequel la détermination (330, 720) de la résolution de rapport de mesure à utiliser comprend en outre la sélection d'une résolution de rapport de mesure parmi une pluralité de résolutions de rapport de mesure différentes.

5. Dispositif sans fil (110) selon la revendication 4, dans lequel le dispositif sans fil (110) est en outre opérationnel pour, avant la détermination (330, 720) de la résolution de rapport de mesure à utiliser, informer (300, 700) le nœud de réseau (115) des capacités du dispositif sans fil à envoyer des rapports de mesure codés sur la base de la pluralité de résolutions de rapport de mesure différentes.

6. Dispositif sans fil (110) selon la revendication 5, dans lequel la pluralité de résolutions de rapport de mesure différentes applicables à un rapport de mesure comprend au moins deux de 5 Ts, 1 Ts, 0,5 Ts et 0,25 Ts, facultativement dans lequel l'une de la pluralité de résolutions de rapport de mesure différentes est considérée comme étant la résolution de rapport de mesure par défaut.

7. Dispositif sans fil (110) selon la revendication 5, dans lequel le dispositif sans fil (110) est en outre opérationnel pour, après avoir informé (300, 700) le nœud de réseau (115) des capacités du dispositif sans fil, et avant la détermination (330, 720) de la résolution de rapport de mesure à utiliser, recevoir (310, 710) une résolution de rapport de mesure souhaitée en provenance du nœud de réseau (115).

8. Dispositif sans fil (110) selon la revendication 7, dans lequel la résolution de rapport de mesure souhaitée est basée sur un ou plusieurs de :

une indication que le dispositif sans fil (110) est sous une couverture de petite cellule ;
une indication que le dispositif sans fil (110) est sous une couverture de macro cellule ;
une largeur de bande de signal de référence spécifique à la cellule (CRS) sur une cellule de desserte sur laquelle la mesure est effectuée ;
une largeur de bande de signal de référence de positionnement (PRS) sur la cellule de desserte sur laquelle la mesure est effectuée ;
une largeur de bande de signal de référence de sondage (SRS) de signaux transmis par le dispositif sans fil (110) ;
des résultats de puissance reçue de signal de référence mesurée (RSRP) et de qualité reçue de signal de référence (RSRQ) ; et
des paramètres de coût.

9. Nœud de réseau (115) permettant d'adapter une résolution de rapport de mesure, le nœud de réseau (115) comprenant :

une circuiterie de traitement (1120) ; et
une mémoire (1130), la mémoire (1130) contenant des instructions exécutables par la circuiterie de traitement (1120), de telle manière que ledit nœud de réseau (115) soit opérationnel pour effectuer :

la réception (420) d'un rapport de mesure d'une mesure en provenance d'un dispositif sans fil (110) ; et
la dérivation (430) de la mesure sur la base d'informations disponibles relatives à une résolution de rapport de mesure ;

dans lequel, si le rapport de mesure est codé sur la base d'une résolution de rapport de mesure, sélectionnée par le dispositif sans fil (110), qui est différente d'une résolution de rapport de mesure souhaitée ou d'une résolution de rapport de mesure par défaut, le rapport de mesure inclut une indication de la résolution de rapport de mesure utilisée par le dispositif sans fil (110) ; et
si le rapport de mesure est codé sur la base d'une résolution de rapport de mesure qui est la même que la résolution de rapport de mesure souhaitée ou que la résolution de rapport de mesure par défaut, le rapport de mesure exclut une indication de la résolution de rapport de mesure utilisée par le dispositif sans fil (110) .

10. Nœud de réseau (115) selon la revendication 9, dans lequel la résolution de rapport de mesure à utiliser est sélectionnée par le dispositif sans fil (110) parmi une pluralité de résolutions de rapport de mesure différentes.

11. Nœud de réseau (115) selon la revendication 10, dans lequel le nœud de réseau (115) est en outre opérationnel pour, avant la réception (420) du rapport de mesure, recevoir (400), en provenance du dispositif sans fil (110), des capacités du dispositif sans fil à envoyer des rapports de mesure codés sur la base de la pluralité de résolutions de rapport de mesure différentes.

12. Nœud de réseau (115) selon la revendication 11, dans lequel la pluralité de résolutions de rapport de mesure différentes applicables à un rapport de mesure comprend au moins deux de 5 Ts, 1 Ts, 0,5 Ts et 0,25 Ts, facultativement dans lequel l'une de la pluralité de résolutions de rapport de mesure différentes est considérée comme étant une résolution de rapport de mesure par défaut.

13. Nœud de réseau (115) selon la revendication 11, dans lequel le nœud de réseau (115) est en outre opérationnel pour, après avoir reçu (400) les capacités du dispositif sans fil, et avant la réception (420) du rapport de mesure, envoyer (410) une résolution de rapport de mesure souhaitée au dispositif sans fil (110).

14. Nœud de réseau (115) selon la revendication 13, dans lequel la résolution de rapport de mesure souhaitée est basée sur un ou plusieurs de :

une indication que le dispositif sans fil (110) est sous une couverture de petite cellule ;
une indication que le dispositif sans fil (110) est sous une couverture de macro cellule ;

une largeur de bande de signal de référence spécifique à la cellule (CRS) sur une cellule de desserte sur laquelle la mesure est effectuée ;

une largeur de bande de signal de référence de positionnement (PRS) sur la cellule de desserte sur laquelle la mesure est effectuée ;

une largeur de bande de signal de référence de sondage (SRS) de signaux transmis par le dispositif sans fil (110) ;

des résultats de puissance reçue de signal de référence mesurée (RSRP) et de qualité reçue de signal de référence (RSRQ) ; et

des paramètres de coût.

**15.** Réseau (100) comprenant au moins l'un d'un dispositif sans fil selon la revendication 3 et d'un nœud de réseau (115) selon la revendication 9.

FIGURE 1

FIGURE 2

EP 3 354 047 B1

EP 3 354 047 B1

```
┌ ─ ─ ─ ─ ─ ─ ─ ─ ─ ─ ─ ─ ─ ─ ─ ─ ┐
│    The device provides to the network    │
│  node capabilities of reporting with     │      300
│        different resolutions             │
└ ─ ─ ─ ─ ─ ─ ─ ─ ─│─ ─ ─ ─ ─ ─ ─ ─ ┘
                   ▼
┌ ─ ─ ─ ─ ─ ─ ─ ─ ─ ─ ─ ─ ─ ─ ─ ─ ┐
│        The device obtains a desired        │      310
│  measurement report resolution from    │
│           the network node               │
└ ─ ─ ─ ─ ─ ─ ─ ─ ─│─ ─ ─ ─ ─ ─ ─ ─ ┘
                   ▼
┌──────────────────────────────────┐
│   The device performs a measurement   │      320
│                                        │
└──────────────────│───────────────┘
                   ▼
┌──────────────────────────────────┐
│      The device determines a          │      330
│   measurement report resolution      │
│                                        │
└──────────────────│───────────────┘
                   ▼
┌──────────────────────────────────┐
│   The device sends a measurement     │
│  report to the network node using     │      340
│  the determined report resolution    │
│                                        │
└──────────────────────────────────┘
```

FIGURE 3

FIGURE 4

UE                                    Network Node

500    ----Report resolution capability---->

510    <----Desired report resolution----

520    | Encode measurement |

530    ----Measurement report---->

                                    | Derive measurement | 540

## FIGURE 5

600

610

620    630

The device provides to the network
node capabilities of reporting with
different resolutions

Is default
report
resolution
acceptable ?

Yes

No

The network node refrains from
sending a desired report
resolution to the device

The network node sends a
desired report resolution to the
device

FIGURE 6

700 — The device provides to the network node capabilities of reporting with different resolutions

710 — The device obtains a desired measurement report resolution from the network node

720 — The device performs a measurement and selects a report resolution

730 — Determine if to include report resolution information

Selected report resolution is different from the default resolution or the desired resolution

Selected report resolution is the same as the default resolution or the desired resolution

740 — The device includes the report resolution information in the measurement report

750 — The device excludes the report resolution information in the measurement report

FIGURE 7

FIGURE 8

FIGURE 9

FIGURE 10

EP 3 354 047 B1

115

Transceiver
1110

Processor
1120

Memory
1130

Network
Interface
1140

FIGURE 11

```
┌──────────────────────────────────────────────────────────┐
│                                                          │
│              ┌──────────────────┐                         │
│              │                  │                         │
│              │    Processor     │                         │
│              │                  │                         │
│              │      1220        │                         │
│              │                  │                         │
│              └──────────────────┘                         │
│                       │                                   │
│    ◄──────────────────┼───────────────────────────────►  │
│                       │                                   │
│      ┌──────────────────┐      ┌──────────────────┐       │
│      │                  │      │                  │       │
│      │    Network       │      │     Memory       │       │
│      │    Interface     │      │                  │       │
│      │                  │      │      1230         │       │
│      │      1240        │      │                  │       │
│      └──────────────────┘      └──────────────────┘       │
│                                                          │
└──────────────────────────────────────────────────────────┘
                                                    ↱ 130
```

FIGURE 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ERICSSON.** Text Proposal and Discussion on Further enhancements for OTDOA. *3GPP TSG RAN WG1 Meeting #82,* 24 August 2015